# EUROPEAN PATENT APPLICATION

(11) **EP 0 708 240 A1**
(43) Date of publication of application: **24.04.1996**
(21) Application number: 94307767.7
(22) Date of filing: 21.10.1994
(51) Int. Cl.: F03B 17/00, F03B 7/00

(54) **Water mill**

(71) Applicant: Laemthongsawad, Prasert, Chaiprakarn District, Chiangmai Province (TH)
(72) Inventor: Laemthongsawad, Prasert, Chaiprakarn District, Chiangmai Province (TH)
(74) Representative: Morton, Colin David

(57) **Abstract**

A turbine has turbine impellers (8) fixed around the outside of a steel rotor (14). The apertures between each impeller are adapted to have a basket-like shape by using iron sheet welded to close both sides of each aperture, forming containers (9) for holding water. Turbine operation is initiated by pumping water with a water pump (3) from a storage well (1). The water is pumped up a pipe (4) to flow into the containers. When the containers are filled with water, the water will be stored. The weight of the water will unbalance the turbine to start its rotation. When the containers rotate to the end of a curved water retention wall (7), the mouths of the containers will be inverted and water will run out until the containers are empty. The empty containers will rotate up to receive the water again. This circulation process continues while the pump is operational.

## Description

### Field of the Invention

This invention relates to a water turbine system.

### Object of the Invention

The general aim of the invention is to provide a turbine using water that can be provided without relying on natural reservoirs. This water turbine, therefore, can be used everywhere without worrying about water shortage, because it requires a smaller water storage well and a lesser quantity of water for circulation. Even though the turbine is working all the time, the water will not run dry from the storage well within the water circulation system.

### The Invention

According to the invention, there is provided a water turbine system comprising a cylindrically-walled rotor in use mounted generally horizontally and carrying spaced impeller blades having transverse closure walls between them such that each adjacent pair of blades forms a water container having an open mouth remote from the rotor wall, a water reservoir, a water pump, a prime mover for operating the pump, water delivery means through which in use water from the reservoir is pumped to a point adjacent the top of the rotor assembly to deliver water into the containers through the upwardly directed mouths thereof, thereby causing the rotor to rotate, and water return means at or near the bottom of the rotor assembly for collecting water emptied from the downwardly directed mouths of the containers and returning it to the reservoir.

In more detail, the apertures between the impellers have a basket-like shape to hold water, received via a water pump from a storage well, thus driving the turbine. These containers can be formed by using steel sheets welded to close the two sides of each impeller. Each aperture between impellers thus has the required basket-like shape. The turbine rotor forms the bottoms of the basket-like containers that enables them to hold water. Mounting the impellers (containers) on the turbine rotor at the right angle of inclination will give the impellers' side walls a trapezoidal shape.

The bottom of the impeller containers is deep enough to store more water. The outer ends of the turbine impellers (containers) form the mouths of the baskets; wide rectangular-shaped mouths which draw more water, faster. The mouths of the basket-like impellers will tip up when they move up to the highest level. The mouths will turn upside down when they move up to the lowest level. Water will run down inside the container when the basket-like impellers move to the lowest point. At the centre of the turbine rotor there is a shaft tightly fixed to the turbine frame centre. When the turbine spins around, the shaft will also turn around.

The turbine rotor has a cylindrical shape and has a long shaft extending beyond the turbine rotor for siting of bearings. The extended horizontal shaft will hold the bearings tightly with ball races and will be parallel with the water level. The shaft can rotate by itself easily and freely. When the water pump is operated, water will be pumped from the water storage well up to the highest point of the water turbine, and then the water will be released into the bottom of the basket-like impellers. This action will make the turbine lose its stability and the impeller in turn moves lower down. The next basket-like impeller will move to replace the previous one to take water into its basket. As the impeller moves lower, the water will tend to run out of its mouth.

A curved wall is provided to match the path of the impeller so as to stop the water from running out. When the basket-like impellers reach the lowest point the mouths of the basket-like impellers will turn upside down. Lengths of curved wall finish here to allow the water to run off from the basket mouths and gather in the water storage well from between the curved walls. The curved walls must be made in the shape of lipped panels to hold the turbine's sides perfectly and constantly rigid with the curves of the walls. The lips also can be used as water stoppers to stop the water from running off at the turbine sides.

Individual features of the system will now be referred to in more detail:-
(1) Basket-like Impellers in the Turbine: These components have the purpose of receiving water from the water pump and also help to store as much water as possible therein when they move to the highest point on the top of the turbine. The water will be stored inside the baskets until they move down to the lowest point, then the baskets will overturn. The water will then run out to empty the baskets.
(2) Cylindrically Shaped Turbine Rotor: The purpose of this component is to hold the impeller blades at the outside, horizontally and with the same distance of aperture. The cylindrically shaped turbine rotor will be mounted onto a shaft at the centre of the turbine.
(3) Turbine shaft: The purpose of this component is to hold the cylindrically shaped turbine rotor handling the moving force of the turbine and to deploy rotational force to the turbine for use in all kinds of applications. The turbine shaft is intended to work horizontally and parallel with the water level.
(4) Bearings: The purpose of these components is to handle the weight of the turbine shaft, the cylindrical turbine rotor and basket-like impellers, including water weight inside the baskets. Two sets of bearings will be positioned tightly at the two ends of the shaft to hold the bearings' inner races tightly.
(5) Bearing Races: The purpose of these components is for mounting the bearings, including the whole set of turbine impellers. The races hold the turbine shaft in a horizontal plane parallel with the water level. The races are set perpendicular to the shaft.
(6) Curved Walls: These components have the purpose of preventing water from running out of the basket-like impellers when they rotate downward from the water receiving point. The curved walls and the baskets are not attached to each other but they are separated into different parts. The first curved wall begins from the highest point of the turbine and stops at the lowest point of the turbine. The arc of the curve is perfectly angled to fit the end of the turbine impellers so that they are neither adjoining nor have friction with each other. The impellers also should not be so far from each other that the water leaks out. When the baskets rotate to the ending point of the curved walls, the basket mouths are turned upside down so there is nothing stopping the water. The water will run out of the baskets until the baskets are empty. Two edges of the curved walls are designed as lips for holding the exact curve permanently and to block the water running off the sides of the impellers.
(7) Water Pump: The purpose of this component is to pump water from the water storage well along a pipe up to the highest point of the turbine and release the water into the mouth of the baskets.
(8) Water Storage Well: The purpose of the water storage well is to store water for pumping whenever the turbine is required for use. The water storage well is the safest way for water use during turbine rotation.

Operation of the invention is as follows:-
Before the water turbine can rotate, it must be turned on at the water pump. When the water pump starts to work, the water in the water storage well will be pumped along the pipe up to the highest point of the turbine. Then the water will be drained off from the pipe into the mouths of the basket-like impellers. The water will be stored inside the baskets. When the basket-like impellers have the water stored inside, the weight of the water will make the turbine loose its stability and the basket-like impellers will rotate downwards. The next basket-like impeller will move into its place. This will happen continuously all the time while the water pump is working. When the water turbine is not required to operate, it is necessary to turn off the water pump.

As is well known, the turning of the water turbine is the use of hydroelectric power to drive the turbine around on its shaft, relying on the use of water from natural sources, such as water from canals, reservoirs and water from other sources. The quantity of water available is uncertain, for it depends on the seasons and climate. In the rainy season of any year where there is a lot of rain fall, it may create a strong tide. The strong tide can cause a lot of damage to all the equipment. Any year that receives less rain fall, results in water in canals running dry and no water for turbine operation. In places where grographical features of the places are poor, where there are no water sources such as canals, it is not possible either to use the water turbine or make water turbines which work in conjuction with natural water sources; it is also difficult because the quantity of rain fall within the whole year is unequal. This causes an inefficiency in the use of the water turbine.

The building of the water storage well and use of a water pump is a solution to enable the turbine to spin. This solution also provides us with total non-reliance on nature. All water turbines, water pumps and water storage wells can be built in sufficient size for use and for their co-ordination in various works without limitations. Whether the turbine is to operate or to be turned off is a free option. Water for circulated pumping may result in losses to a small degree from evaporation and spill off while the turbine is working. With this principle of working, the cycle action is regulated because the water runs off from the pipe has a regulated rate. This results in efficient rotation of the water turbine and regulated flows as well.

### Description of Embodiment

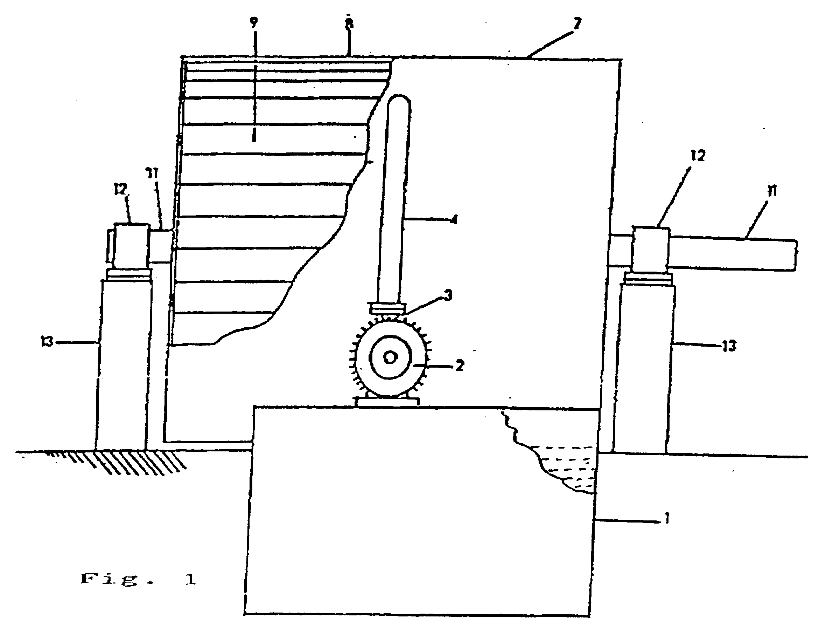

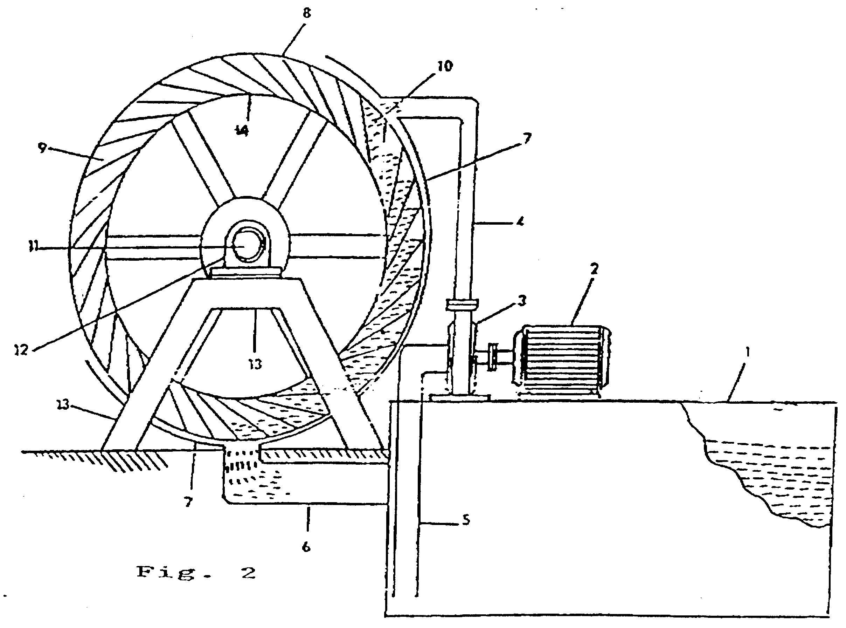

Referring to the claims:-
Figures 1 and 2 illustrate the front and the sides of the water turbine, water storage well (1), electric motor (2), water pump (3), water pipe (4), water suction into the pump (5), water draining pipe (6), curved walls to retain water (7), turbine impeller (8), basket-like apertures between impellers (9), rotor (10), turbine shaft (11), bearings to handle the head of the turbine shaft (12), the bearing races for the head of the turbine shaft (13), and the cylindrically shaped turbine rotor.

The turbine is composed of turbine impellers (8), the cylindrically shaped steel rotor (14), bearings (18), and bearing races (13). These parts have different functions from each other and relate to each other as follows: the turbine impellers (8) which are fixed in line at the outside at an angle of inclination to the cylindrically shaped turbine rotor (14); each turbine impeller is located a specified distance from each other. The impellers are aligned horizontally and parallel with the water level at the sides of the impellers. The mouths of each aperture between the impellers are welded with iron to close them and are formed into basket-like impellers or containers. Each impeller is transformed into a joint wall for the next basket. The cylindrically shaped steel rotor (14) forms the bottom of the basket. When seen in side view, this part has a trapezoid shape. The mouths of these baskets are situated at the end of the turbine with a rectangle shape. The mouths are open wide enough to allow water flow to be stored within the baskets (9). The cylindrically shaped turbine rotor is intended to work in a horizontal plane and is fixed on the turbine shaft (11) at the centre of the turbine frame (14). The two ends of the shaft extend beyond the turbine frame for capping with bearings (12). The bearings are fixed permanently on the inner bearing race (13). The races, when fixed within two sets of bearings, allow the turbine shaft to lie horizontally and parallel with the water level. The plane of the race (13) is in a 90 degree angle to the turbine shaft (11). The turbine shaft can turn easily and freely.

The curved water retention wall (7) has the correct curve fit for the end of the turbine impellers, (8) and is not too close to the end of the impellers (8) to cause friction nor too far away that water leaks. The top section allows the water flow to run off into the baskets (9). Where the curved wall ends below, there is a hole to allow water to flow from the baskets. When the mouths of the baskets rotate downwards to the lowest point, the mouths will overturn. The water will run out of the mouths until the baskets are empty. The curved wall has lips at its sides to rigidify the fixed curve and stop the water from running off at the sides of the turbine as well.

The water pump and pipe operate when electrical power is supplied to the motor (2). The motor operates to drive the water pump (3). The water in the storage well (1) is pumped to flow along the suction pipe (5) passing the water pump (3) up to the water pipe (4) and run out of the water pipe (4) into the baskets (10). When the baskets are filled with water, the weight of the water imbalances the turbine. The weight makes the baskets move downwards. The next basket will move round in its place to receive water, to propagate rotation of the water turbine. When the mouths of the baskets rotate to the lowest point, the mouths of the baskets will be inverted and in the meanwhile will reach the end of the invented curve wall water stopper. The water will run out of the basket (9) until emnpty. After that the water will flow back along the water draining pipe (6) and return back to the water storage well (1). This process will thus circulate water continuously.

The water storage well stores an amount of water sufficient for pumping to drive the turbine impellers.

The efficiency of these aforesaid parts, if they are all designed precisely to correlate to the others, enables the turbine to operate freely and have sufficient power for use in factories, agriculture and the like.

## Claims

1. A water turbine system comprising a cylindrically-walled rotor (14) in use mounted generally horizontally and carrying spaced impeller blades (8) having transverse closure walls between them such that each adjacent pair of blades forms a water container (9) having an open mouth remote from the rotor wall, a water reservoir (1), a water pump (3), a prime mover for operating the pump (2), water delivery means (4) through which in use water from the reservoir is pumped to a point adjacent the top of the rotor assembly to deliver water into the containers through the upwardly directed mouths thereof, thereby causing the rotor to rotate, and water return means (6) at or near the bottom of the rotor assembly for collecting water emptied from the downwardly directed mouths of the containers and returning it to the reservoir (1).

2. A system according to claim 1, in which the impeller blades (8) are inclined at a pre-determined angle to the radii of the rotor (14) so as to form containers of trapezoidal cross-section, the pre-determined angle of inclination being such that the blades are directed backwards in relation to the sense of rotation of the rotor assembly in use.

3. A system according to claim 1 or claim 2, in which a curved water retention wall (7) is provided around the side of the rotor assembly at which the water containers (9) holding water are moving downwardly in use.

4. A system according to claim 3, in which a curved water retention wall (7) is also provided at the lower region of the side of the rotor assembly at which the empty containers are moving upwardly in use.

5. A system according to claim 4, in which adjacent bottom edges of the curved walls are lipped to provide a mouth for connection to the water return means.

6. A system according to claim 3 or claim 4 or claim 5, in which the first mentioned curved wall has an opening constituting a port to which is connected the delivery end of the water delivery means.
